# EUROPEAN PATENT APPLICATION

(11) **EP 3 403 501 A1**
(43) Date of publication of application: **21.11.2018**
(21) Application number: 17171140.1
(22) Date of filing: 15.05.2017
(51) Int. Cl.: A01M 29/32

(54) **ANIMAL DETERRENT**

(71) Applicant: Discovery Products Ltd, Canterbury, Kent CT3 4JZ (GB)
(72) Inventor: Martino, Leo, Canterbury, Kent CT3 4JZ (GB)
(74) Representative: Bridle, Andrew Barry

(57) **Abstract**

An animal deterrent apparatus comprising an elongate core and a plurality of resiliently deformable bristles, wherein the bristles extend radially outwards from the core through an angle of from 90° to 180° and the bristles are arranged along the longitudinal axis of the core in two or more groups and each group is spaced from a neighbouring group to define a gap between the adjacent groups of bristles, wherein each gap portion of the core contains no bristles.

## Description

The present invention relates to an animal deterrent, for example to prevent or dissuade birds from landing or roosting in a particular area and/or to prevent or dissuade cats, squirrels, rats, etc. from crossing certain barriers or entering certain areas.

Urban areas and coastal areas often suffer problems with groups of birds landing or roosting in certain locations, not least the problem of the mess that groups of birds can generate. Similarly, cats, squirrels, rats, etc. often cross garden boundaries, such as garden fences and the like, to get from one area to another area. It may be desired to deter animals, such as cats, squirrels, rats, etc. from entering a particular area.

It is known to provide an arrangement of metal or polymeric spikes on surfaces which may appear attractive to birds or which are crossed by certain animals. However, such spikes tend to be mounted on rigid planar base plates and, as a result of this, they tend to be limited to straight arrays of the spikes. As a result of the rigid base plates, it is difficult to mount such arrangements around bends or corners, or around obstacles.

In addition, it is often difficult to mount a base plate containing projecting spikes on relatively narrow substrates, such as aerials and the like.

According to a first aspect of the invention, there is provided an animal deterrent apparatus comprising an elongate core and a plurality of resiliently deformable bristles, wherein the bristles extend radially outwards from the core only through an arc which has an angle of from 90° to 180° and the bristles are arranged along the longitudinal axis of the core in two or more arrays, wherein each array has a longitudinal length and the bristles within the array extend radially outwards along the length of the array; in each array, the bristles extend radially outwards substantially about the entire arc; each array is spaced from a neighbouring array to define a gap between the adjacent arrays of bristles, wherein each gap portion of the core contains no bristles; and the length of each array is greater than the respective gaps between adjacent arrays.

The skilled person will appreciate that having the bristles extend radially outwards along the length of the array means that bristles extend from points located along the entire length of the array. This means that there are no significant axial spacings between the bristles along the length of the array. A significant spacing is considered to be more than 10mm, optionally more than 5mm or more than 1mm.

Similarly, the skilled person will appreciate that having the bristles extend radially outwards substantially about the entire arc means that when the array is viewed along the axis of the core, there are no significant angular spacings between the bristles throughout the arc. A significant angular spacing is considered to be more than 10°, optionally no more than 5° or 2°.

As the animal deterrent apparatus of the subject invention is based around a core which may be bendable (i.e. malleable) and which has a relatively narrow width, the apparatus may be affixed to non-linear substrates and to objects having relatively narrow dimensions, such as aerials and the like.

The length of each array may be substantially the same and this length is greater than the length of the gap(s) between the arrays of the deterrent apparatus. For example, the length of each array may be at least twice the length of the gap(s), at least three times the length of the gap(s), or at least four times the length of the gap(s).

Suitably, the bristles of the invention extend radially outwards through an arc having an angle of 120° to 180°, such as for example an angle which is substantially 180° in which the bristles define substantially semi-circular arrays about the core. Thus, in a second arc, having an angle of at least about 180° around the core, the core may be free from bristles.

In embodiments in which the bristles extend around the core through an arc having an angle of about 180°, the bristles at either end of the semi-circular arc are able to support the apparatus, as they define a substantially linear projection on opposing sides of the core, which resists or prevents rotation of the core about its longitudinal axis.

The core may be formed of a metal and is suitably malleable or flexible. In the context of the present invention, the term "malleable" is intended to have the meaning that the elongate core may be bent or manipulated into a desired configuration and it will remain in that configuration in the absence of any external forces. Thus, the core may be described in certain embodiments as bendable. In this way, the core may be formed into non-linear configurations, for examples, it may be bent for arrangement around corners or obstacles.

The core may comprise one or more elongate elements, which are suitably metallic elements. The elements may have a circular cross section and may be solid or hollow. The core may comprise two or more elongate strands, for example metallic strands, which are woven, braided or twisted together, much like the strands of a rope. For example, the twisted strands may form an interwoven double helix, an interwoven triple helix or an interwoven quadruple helix. Such an arrangement is known in the context of brushes and the bristles may be secured between adjacent strands. The core may comprise two, three or four strands twisted together along their length to form the core. The individual strands are suitably malleable (i.e. flexible and/or bendable).

The bristles may be formed from a polymeric material. In this way the physical properties of the bristles can be better controlled, such as their stiffness, resilience, weather resistance, visual appearance, etc. The bristles may be formed from a polypropylene polymer or a nylon polymer for example.

The bristles may be formed from a transparent or translucent polymer. In this way, their visual impact on the area in which the apparatus is located may be reduced or minimised. Additionally or alternatively, the bristles may reflect at least a portion of the incident light radiation that falls upon them. This may provide an enhanced visual deterrent property regarding animals such as birds.

The bristles suitably have an average length of 20mm or more, suitably 30mm, 40mm or 50mm or more. The length of the bristles is typically a balance between providing an adequate deterrent to the animals and the visual impact of the apparatus.

In an embodiment of the invention, the gaps defined between adjacent arrays or groups of bristles are substantially equal in length. This allows for a common securing element to be used to secure the apparatus to a substrate. The gap is suitably sufficiently small that it is unable to accommodate a target animal such as a bird therein. Thus, the gaps permit the apparatus to be secured to a substrate, but maintain the animal deterrent property along the entire length of the core. For example, the gaps may be 5 to 30mm in length (i.e. the distance between adjacent groups of bristles). The length of the gaps may have a lower limit of 10mm and/or they may have an upper limit of 20mm.

The gaps between the arrays or groups of bristles are suitably provided to define a clamping portion of the core, whereby the apparatus may be secured to a suitable substrate via one or more clamps or similar securing elements located at a respective gap. Thus, the apparatus may include one or more securing elements, such as clips, wherein the or each securing element is configured for location within a respective gap. In this embodiment, the or each securing element may secure a portion of the core which defines a gap to a suitable substrate. In this way, the bristles do not interfere with the securing element, which makes it easier to secure the apparatus in the desired location.

The or each securing element may be in the form of a clip which comprises a body that defines a channel and is adapted to receive therein a portion (i.e. a clamping portion) of the elongate core. The or each clip may further include at least one fixing element via which the clip may be secured to a substrate. The fixing element may comprise one or more holes defined through a portion of the clip body, for example a tab portion of the body which is spaced from the channel. In such an embodiment, a screw or similar fixing may be inserted through a respective hole defined by the body and the clip is secured to the substrate via the screw.

In an alternative embodiment, the securing element may comprise a strap which may be secured around a relatively narrow substrate (such as an aerial, for example) and the core of the apparatus.

In an embodiment of the invention, the core has a first end and a second end and at least one of the terminal arrays of bristles are spaced from the respective end of the core. Suitably, the terminal arrays of bristles at both ends are spaced from the respective ends of the core. In this embodiment, the ends of the core may be secured to the substrate via a securing element or other fixing. Additionally or alternatively, the end portions of two separate apparatus may be joined to form a linear series of the two apparatus, thereby doubling the effective length of the apparatus. Accordingly, the apparatus may include a coupling adapted to couple one end of a first apparatus to one end of a second apparatus, for example a distal end of the first apparatus may be coupled to a proximal end of the second apparatus. The coupling may comprise a body which defines a channel or bore which is sized to receive both end portions of the two apparatus, or it may define two channels or bores, wherein each end portion is received by a respective one of the channels or bores. The coupling may comprise one or more fixing elements as defined above.

The skilled person will appreciate that the features described and defined in connection with the aspect of the invention and the embodiments thereof may be combined in any combination, regardless of whether the specific combination is expressly mentioned herein. Thus, all such combinations are considered to be made available to the skilled person.

An embodiment of the invention will now be described, by way of example only, with reference to the accompanying drawings in which:
Figure 1 is an elevational view from one end of an animal deterrent apparatus according to the first aspect of the invention;
Figure 2 is a longitudinal cross-sectional view of the apparatus shown in Figure 1; and
Figure 3 is a cross-section through a clip for use with the apparatus shown in Figure 1.

For the avoidance of doubt, the skilled person will appreciate that in this specification, the terms "up", "down", "front", "rear", "upper", "lower", "width", etc. refer to the orientation of the components as found in the example when installed for normal use as shown in the Figures.

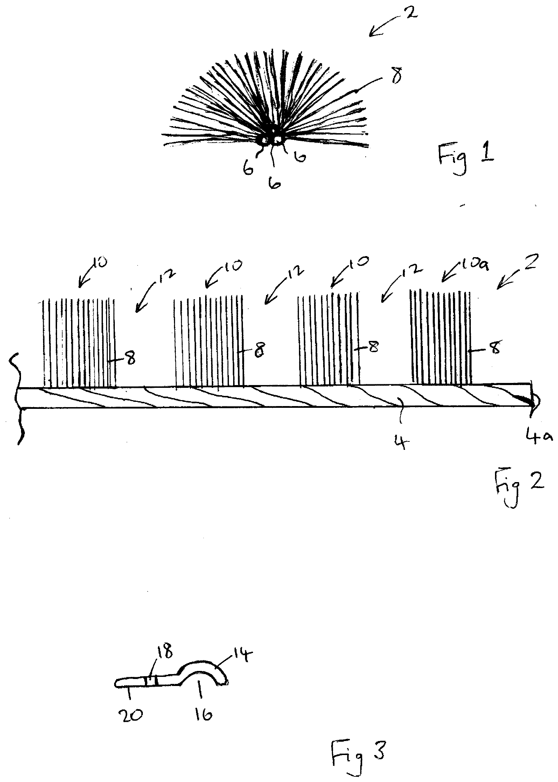

Figures 1 and 2 show an animal deterrent apparatus 2. As can be seen, the apparatus 2 comprises an elongate core 4 formed from three interwoven (i.e. twisted) elongate core strands 6. The core 4 is formed from galvanised steel or stainless steel such that it resists or prevents corrosion (e.g. rusting) when located in an outside environment and exposed to the elements. The elongate steel strands 6 together may be bent into a desired, non-linear configuration such that it can be formed to conform to non-linear substrates or substrate portions, and it may be located around obstacles.

Bristles 8 extend radially outwards from the core 4 and end portions of the bristles 8 are trapped between the core strands 6 in a manner that is common in the formation of elongate bristle brushes. An adhesive may be applied to the core 4 to provide a stronger bond between the bristles 8 and the core 4.

The bristles 8 are formed from a translucent polypropylene polymer which is capable of reflecting incident light. The reflectance of visible light provides a visual deterrent against animals such as birds.

As shown in Figure 1, the bristles 8 extend radially outwardly through an angle of about 180° around the core 4. Thus, the bristles 8 form a semi-circular arc around the core 4. In this way, the bristles 8 at either end of the semi-circular arc extend in opposite directions and define a substantially planar surface which supports the apparatus 2 and prevents it from rotating about the core 4.

As can be seen in Figure 2, the bristles 8 are arranged in arrays 10, and a gap 12 is defined between adjacent arrays 10 of bristles 8. Each gap 12 defines a 10mm spacing between adjacent arrays 10 of bristles 8 and each array of bristles is 150mm long. The skilled person will appreciate that the length of each array 10 and the length of the gaps 12 can be varied as desired.

As can also be seen from Figure 2, the terminal array 10a of bristles is spaced from the end 4a of the core 4. The terminal array of bristles at the opposite end of the core (not shown) is similarly spaced from the opposite end of the core 4.

The apparatus 2 further includes a clip 14 which is shown in Figure 3. The clip 14 comprises a body which defines an arcuate channel 16 which is sized to receive therein a clamping portion of the core 4, which is defined as a portion of the core 4 between adjacent arrays 10 of the bristles 8 (i.e. a portion of the core 4 located within one of the gaps 12). The clip 14 has a width which is 8-9mm so that the clip 14 fits within a respective one of the gaps 12.

The clip 14 defines a hole 18 which extends through a tab portion 20 of the clip 14. The hole 18 is sized to receive therethrough a screw via which the clip, and therefore also a portion of the core 4 located within the channel 16, may be secured to a substrate, such as a roof or fence.

## Claims

1. An animal deterrent apparatus comprising an elongate core and a plurality of resiliently deformable bristles, wherein the bristles extend radially outwards from the core through an arc which has an angle of from 90° to 180° and the bristles are arranged along the longitudinal axis of the core in two or more arrays, wherein each array has a longitudinal length and the bristles within the array extend radially outwards along the length of the array; in each array, the bristles extend radially outwards substantially about the entire arc; each array is spaced from a neighbouring array to define a gap between the adjacent arrays of bristles, wherein each gap portion of the core contains no bristles; and the length of each array is greater than the respective gaps between adjacent arrays.

2. An animal deterrent apparatus according to Claim 1, wherein the bristles define a substantially semi-circular array about the core.

3. An animal deterrent apparatus according to Claim 1 or Claim 2, wherein the elongate core is formed from a metal.

4. An animal deterrent apparatus according to any of Claims 1 to 3, wherein the core comprises two or more elongate strands twisted together.

5. An animal deterrent apparatus according to any of Claims 1 to 4, wherein the bristles are formed from a polymeric material.

6. An animal deterrent apparatus according to Claim 5, wherein the bristles are transparent or translucent.

7. An animal deterrent apparatus according to any of Claims 1 to 6, wherein the bristles reflect at least a portion of the incident light radiation.

8. An animal deterrent apparatus according to any of Claims 1 to 7, wherein the gaps defined between adjacent arrays of bristles are substantially equal in length.

9. An animal deterrent apparatus according to any of Claims 1 to 8, wherein the apparatus further includes one or more securing elements and each securing element is configured for location within a respective gap between adjacent arrays of bristles.

10. An animal deterrent apparatus according to Claim 9, wherein each securing element comprises a body which defines a channel adapted to receive therein a portion of the elongate core, and at least one fixing element via which the securing element may be secured to a substrate.

11. An animal deterrent apparatus according to any of Claims 1 to 10, wherein the core has a first end and a second end and the terminal groups of bristles are spaced from the respective ends of the core.

12. A combination of two or more bird deterrent apparatus according to any of Claims 1 to 11, wherein a distal end of a first apparatus is coupled to a proximal end of a second apparatus via a coupling element to form a linear series of the two or more apparatus.
